# FASCICULE DE BREVET EUROPEEN

(11) **EP 3 435 269 B1**
(45) Date de publication et mention de la délivrance du brevet: **19.02.2020**
(21) Numéro de dépôt: 18183311.2
(22) Date de dépôt: 13.07.2018
(51) Int. Cl.: G06F 21/52, G06F 12/14, G06F 21/55, G06F 21/77

(54) **PARE-FEU LOGICIEL**
FIREWALL FÜR SOFTWARE
SOFTWARE FIREWALL

(30) Priorité: 27.07.2017 FR 1757125
(43) Date de publication de la demande: 30.01.2019
(73) Titulaire: Idemia Identity & Security France, 92400 Courbevoie (FR)
(72) Inventeur: DEL GIUDICE, Lauren, 92130 Issy Les Moulineaux (FR); DUCLOS, Rémi, 92130 Issy Les Moulineaux (FR); FAGES-TAFANELLI, Yoann, 92130 Issy Les Moulineaux (FR)
(74) Mandataire: Cabinet Le Guen Maillet

(56) Documents cités:
- EP-A2- 1 806 674
- CN-A- 105 827 663

## Description

### DOMAINE DE L'INVENTION

La présente invention concerne un pare-feu logiciel installé sur une carte électronique, telle qu'une carte à puce, sur laquelle plusieurs profils d'utilisation coexistent. La présente invention concerne aussi un procédé implémenté par un tel pare-feu logiciel.

### ETAT DE LA TECHNIQUE

Une carte à puce comporte au moins un circuit intégré capable de contenir et de traiter de l'information. Le circuit intégré, *i.e.* la puce, contient un microprocesseur ou microcontrôleur capable de traiter l'information, qui est stockée dans une mémoire non volatile. Le microprocesseur ou microcontrôleur permet d'implémenter un système d'exploitation qui assure le déroulement d'échanges d'informations et de traitements réalisés au sein de la carte puce. Le système d'exploitation définit un environnement d'exécution de code intermédiaire (dit « bytecode » en anglais) indépendant d'un matériel de carte à puce grâce auquel des applications, dites *applets,* sont exécutées. Cet environnement d'exécution est appelé JCRE (« Java Card Runtime Environment » en anglais) en terminologie Java Card, qui est une technologie largement répandue dans la conception des cartes à puce. Le système d'exploitation comporte un interpréteur permettant l'exécution du code intermédiaire des applets installées en mémoire non volatile sur la carte à puce. Cet interpréteur est appelé *machine virtuelle,* JCVM (« Java Card Virtual Machine » en anglais) en terminologie Java Card. Le système d'exploitation comporte également un ensemble de librairies contenant les fonctions de base (APIs, pour « Application Programming Interfaces » en anglais) utiles au développement d'applets pour cartes à puce. Pour de plus amples détails sur la technologie Java Card, on pourra notamment se référer aux spécifications « Java Card Classic Plateform », version 3.0.4.

Les cartes à puce sont principalement utilisées comme moyens d'identification personnelle, ou de paiement, ou de preuve d'abonnement à des services prépayés. Ainsi, les cartes à puce contiennent typiquement des données considérées comme confidentielles. Les cartes à puce peuvent ainsi faire l'objet d'attaques, qui ont pour finalité de récupérer ces données confidentielles. Ces attaques peuvent être physiques ou logiques. Les attaques logiques consistent à faire exécuter par le système d'exploitation, et plus particulièrement l'interpréteur, des applications malveillantes, qui contiennent par exemple des séquences frauduleuses de code intermédiaire.

Il existe des pare-feu logiciels qui assurent des vérifications de droits d'accès entre contextes d'exécution des applets, de sorte à n'autoriser l'accès à une applet cible dans un contexte par une autre applet dans un autre contexte que si l'applet cible offre une interface partagée (« shareable interface » en anglais).

Le document EP 1 806 674 A2 présente une méthode permettant de sécuriser l'accès depuis un premier contexte à des fonctionnalités d'un second contexte selon les permissions d'accès du domaine de protection du premier contexte.

Cependant de tels pare-feu logiciels ne sont pas adaptés à prendre en compte des situations dans lesquelles l'applet cible n'offrirait une interface partagée qu'à un sous-ensemble des autres applets exécutées sur la carte à puce. Surtout, de tels pare-feu logiciels ne sont pas adaptés à prendre en compte des situations dans lesquelles des accès à des données statiques doivent être contrôlés. Ces cas de figure se présentent notamment lorsque l'utilisation d'une carte à puce est partagée par plusieurs services d'opérateurs distincts, comme c'est le cas dans les cartes électroniques de type eUICC (« embedded Universal Integrated Circuit Card » en anglais). On peut citer par exemple le cas d'une carte SIM (« Subscriber Identity Module » en anglais) permettant d'accéder à des services de téléphonie offerts par des opérateurs distincts. Les droits d'accès offerts par l'interface partagée fournie par une applet seraient alors distincts selon si l'applet est accédée via une autre applet provenant du même opérateur ou si l'applet est accédée via une autre applet provenant d'un autre opérateur, auquel cas une certaine herméticité doit être assurée de manière à éviter d'offrir la possibilité qu'un opérateur ne vienne récupérer ou polluer les données d'un autre opérateur. D'autres exemples d'utilisation d'une carte électronique de type eUICC dans un cadre multi-service peuvent être construits sur le même modèle.

De plus, les problèmes décrits ci-dessus ne se limitent pas au contexte des cartes électroniques de type eUICC. En effet, les mêmes problèmes se posent vis-à-vis de composants électroniques iUICC (« integrated Universal Integrated Circuit Card » en anglais).

### EXPOSE DE L'INVENTION

Il est souhaitable de pallier ces inconvénients de l'état de la technique. Il est plus particulièrement souhaitable de fournir une solution, résistante aux attaques logiques susmentionnées, de fiabilité renforcée.

A cet effet, l'invention concerne un procédé de vérification d'exécution d'applets développées en langage orienté objet et compilées en code intermédiaire, le procédé étant implémenté par un pare-feu logiciel d'un système d'exploitation installé dans un composant électronique de type iUICC ou sur une carte électronique de type eUICC, le système d'exploitation comportant un interpréteur qui est un logiciel interprétant et exécutant le code intermédiaire des applets, chaque applet étant associée à un unique contexte, chaque contexte étant associé à une ou plusieurs applets. Chaque contexte est associé à un unique profil d'utilisation parmi plusieurs profils d'utilisation, chaque profil d'utilisation est associé à un ou plusieurs contextes. Lorsque le pare-feu logiciel est informé par l'interpréteur d'un accès à une donnée statique depuis une première applet vers une seconde applet, le pare-feu logiciel effectue les étapes suivantes : déterminer un profil source de l'accès à la donnée statique, qui est le profil associé au contexte auquel est associée la première applet ; déterminer un profil destinataire de l'accès à la donnée statique, qui est le profil associé au contexte auquel est associée la seconde applet ; vérifier si le profil source de l'accès à la donnée statique est identique au profil destinataire de l'accès à la donnée statique ; lorsque le profil source de l'accès à la donnée statique n'est pas identique au profil destinataire de l'accès à la donnée statique, refuser l'accès à la donnée statique ; et lorsque le profil source de l'accès à la donnée statique est identique au profil destinataire de l'accès à la donnée statique, appliquer des règles de vérification d'accès entre contextes.

Ainsi, grâce à la définition de la notion de profil d'utilisation intégrant la notion de contexte, et grâce au comportement du pare-feu logiciel face à un accès aux données statiques entre applets, les données statiques d'un profil d'utilisation sont protégées d'un accès en provenance d'un autre profil d'utilisation bien que l'accès à des telles données statiques n'impliquent pas de changement de contexte.

Selon un mode de réalisation particulier, un desdits profils d'utilisation est un profil particulier, appelé profil système, géré distinctement des autres profils d'utilisation par le pare-feu logiciel, de telle sorte que, lorsque le profil source de l'accès à la donnée statique est le profil système, le pare-feu logiciel applique les règles de vérification d'accès entre contextes, et lorsque le profil destinataire de l'accès à la donnée statique est le profil système, le pare-feu logiciel refuse l'accès à la donnée statique.

Selon un mode de réalisation particulier, lorsque le pare-feu logiciel est informé par l'interpréteur d'un accès à une donnée non statique ou à une méthode depuis une première applet vers une seconde applet, le pare-feu logiciel effectue les étapes suivantes : déterminer le profil source de l'accès à la donnée non statique ou à la méthode ; déterminer le profil destinataire de l'accès à la donnée non statique ou à la méthode ; vérifier si le profil source de l'accès à la donnée non statique ou à la méthode est identique au profil destinataire de l'accès à la donnée non statique ou à la méthode ; lorsque le profil source de l'accès à la donnée non statique ou à la méthode n'est pas identique au profil destinataire de l'accès à la donnée non statique ou à la méthode, refuser l'accès à la donnée non statique ou à la méthode ; et lorsque le profil source de l'accès à la donnée non statique ou à la méthode est identique au profil destinataire de l'accès à la donnée non statique ou à la méthode, appliquer des règles de vérification d'accès entre contextes. Ainsi, les données non statiques et/ou les méthodes bénéficient d'un même niveau de protection que les données statiques.

Selon un mode de réalisation particulier, lorsque le profil source de l'accès à la donnée non statique ou à la méthode est le profil système, le pare-feu logiciel applique les règles de vérification d'accès entre contextes, et lorsque le profil destinataire de l'accès à la donnée non statique ou à la méthode est le profil système, le pare-feu logiciel (FW) refuse l'accès à la donnée non statique ou à la méthode.

L'invention concerne également un pare-feu logiciel configuré pour effectuer une vérification d'exécution d'applets développées en langage orienté objet et compilées en code intermédiaire, le pare-feu logiciel étant destiné à appartenir à un système d'exploitation destiné à être installé dans un composant électronique de type iUICC ou sur une carte électronique de type eUICC, le système d'exploitation comportant un interpréteur qui est un logiciel interprétant et exécutant le code intermédiaire des applets, chaque applet étant associée à un unique contexte, chaque contexte étant associé à une ou plusieurs applets. Chaque contexte est associé à un unique profil d'utilisation parmi plusieurs profils d'utilisation, chaque profil d'utilisation est associé à un ou plusieurs contextes. Lorsque le pare-feu logiciel est informé par l'interpréteur d'un accès à une donnée statique depuis une première applet vers une seconde applet, le pare-feu logiciel effectue les étapes suivantes : déterminer un profil source de l'accès à la donnée statique, qui est le profil associé au contexte auquel est associée la première applet ; déterminer un profil destinataire de l'accès à la donnée statique, qui est le profil associé au contexte auquel est associée la seconde applet ; vérifier si le profil source de l'accès à la donnée statique est identique au profil destinataire de l'accès à la donnée statique ; lorsque le profil source de l'accès à la donnée statique n'est pas identique au profil destinataire de l'accès à la donnée statique, refuser l'accès à la donnée statique ; et lorsque le profil source de l'accès à la donnée statique est identique au profil destinataire de l'accès à la donnée statique, appliquer des règles de vérification d'accès entre contextes.

L'invention concerne également une carte électronique de type eUICC comportant un système d'exploitation intégrant un pare-feu logiciel tel qu'abordé ci-dessus, configuré pour effectuer une vérification d'exécution d'applets développées en langage orienté objet et compilées en code intermédiaire.

Selon un mode de réalisation particulier, la carte électronique de type eUICC est une carte SIM et les profils d'utilisation sont respectivement associés à des services de téléphonie d'opérateurs distincts.

L'invention concerne également un composant électronique de type eUICC comportant un système d'exploitation intégrant un pare-feu logiciel tel qu'abordé ci-dessus, configuré pour effectuer une vérification d'exécution d'applets développées en langage orienté objet et compilées en code intermédiaire.

### LISTE DES FIGURES

Les caractéristiques de l'invention mentionnées ci-dessus ainsi que d'autres, apparaîtront plus clairement à la lecture de la description suivante d'un exemple de réalisation, ladite description étant faite en relation avec les dessins joints parmi lesquels :
- la Fig. 1A illustre schématiquement une architecture matérielle d'une carte à puce, dans laquelle la présente invention peut être implémentée ;
- la Fig. 1B illustre schématiquement une architecture matérielle d'un composant électronique, dans lequel la présente invention peut être implémentée ;
- la Fig. 2 illustre schématiquement une organisation logicielle implémentée par la carte à puce ;
- la Fig. 3 illustre schématiquement une gestion d'accès entre des applets appartenant à des contextes distincts, selon un premier mode de réalisation ;
- la Fig. 4 illustre schématiquement une gestion d'accès entre des applets appartenant à des contextes distincts, selon un second mode de réalisation ;
- la Fig. 5A illustre schématiquement un algorithme, implémenté par le pare-feu logiciel, de traitement d'un accès entre applets, selon le premier mode de réalisation ; et
- la Fig. 5B illustre schématiquement un algorithme, implémenté par le pare-feu logiciel, de traitement d'un accès entre applets, selon le second mode de réalisation.

### DESCRIPTION DETAILLEE DE MODES DE REALISATION

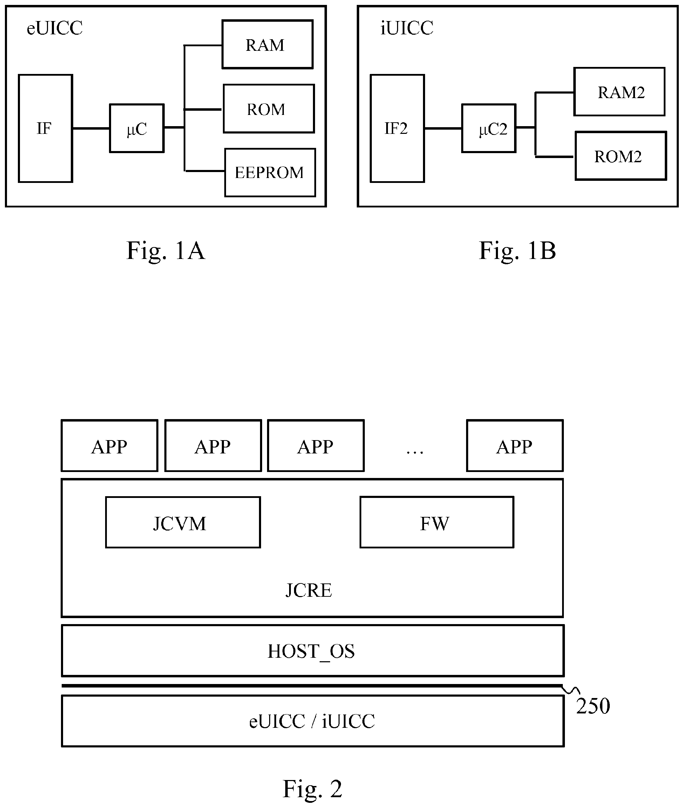

La **Fig. 1A** illustre schématiquement une architecture matérielle d'une carte à puce, c'est-à-dire une carte électronique, de type eUICC, dans laquelle la présente invention peut être implémentée.

La carte à puce eUICC comporte une interface IF configurée pour connecter la carte à puce eUICC à un lecteur de carte (non représenté sur la Fig. 1A). La carte à puce eUICC est par exemple une carte SIM (« Subscriber Identity Module » en anglais) multi-opérateur et le lecteur de carte est inclus dans un terminal de téléphonie mobile. La carte à puce eUICC peut aussi être une carte bancaire multi-service et le lecteur de carte est inclus dans un terminal bancaire, ou une carte de fidélité multi-vendeur et le lecteur de carte est inclus dans un système de caisse enregistreuse. D'une manière générale, la présente invention peut être implémentée au sein d'une carte électronique, préférentiellement une carte à puce, pour laquelle différents profils d'utilisation parallèles sont requis.

L'interface IF est ainsi configurée pour permettre d'effectuer des échanges de données entre le lecteur de carte et la carte à puce eUICC, notamment pour permettre au lecteur de carte d'envoyer des commandes à la carte à puce eUICC, et aussi pour permettre au lecteur de carte d'alimenter en énergie la carte à puce eUICC.

La carte à puce eUICC comporte en outre un processeur, typiquement sous la forme d'un microcontrôleur µC ou d'un microprocesseur, en charge d'effectuer des traitements au sein de la carte à puce eUICC : calculs, traitements et transferts de données, etc.

La carte à puce eUICC comporte en outre une mémoire volatile, telle qu'une mémoire vive RAM (« Random Access Memory » en anglais), ainsi qu'au moins une mémoire non volatile, telle qu'une mémoire morte ROM (« Read Only Memory » en anglais) et une mémoire EEPROM (« Electronically Erasable Programmable ROM » en anglais) ou une mémoire FLASH.

Lorsque la carte à puce eUICC est alimentée en énergie par le lecteur de carte via l'interface IF, le microcontrôleur µC est capable d'exécuter des instructions, notamment sous forme de code intermédiaire, à partir de la mémoire morte ROM et/ou de la mémoire EEPROM.

La mémoire morte ROM et/ou la mémoire EEPROM contiennent typiquement des instructions causant l'implémentation d'un système d'exploitation, préférentiellement un environnement JCRE selon la technologie Java Card, en s'appuyant sur la mémoire non volatile pour créer, au moins, une pile (« stack » en anglais) d'exécution et pour stocker temporairement des données, telles que des données applicatives.

La mémoire EEPROM contient typiquement des instructions d'applications, appelées *applets,* installées sur la carte à puce eUICC, et plus particulièrement, lorsque l'application est instanciée, des objets desdites applications. Les applets sont développées en langage orienté objet et compilées en code intermédiaire. Le contrôle de la création de ces objets et l'attribution d'espace mémoire pour manipuler ces objets sont réalisés par un interpréteur, préférentiellement une machine virtuelle JCVM (« Java Card Virtual Machine » en anglais) de l'environnement JCRE selon la technologie Java Card, en charge d'assurer l'exécution du code intermédiaire, lu depuis la mémoire EEPROM, des applications par le microcontrôleur µC.

A noter que, lorsque le système d'exploitation est implémenté sur une carte électronique autre qu'une carte à puce, le microcontrôleur µC est capable d'exécuter des instructions chargées dans la mémoire vive RAM à partir de la mémoire morte ROM et/ou de la mémoire EEPROM, une fois que ladite carte électronique est alimentée en énergie.

La **Fig. 1B** illustre schématiquement une architecture matérielle d'un composant électronique iUICC, dans lequel la présente invention peut être implémentée. La Fig. 1B correspond à une architecture connue sous le nom de SoC (« System on Chip » en anglais). L'architecture présentée sur la Fig. 1B est très proche de celle présentée sur la Fig. 1A et diffère essentiellement en ce qu'elle est intégrée dans un unique composant électronique. Ainsi, le composant électronique iUICC comporte une interface IF2 configurée pour connecter le composant électronique iUICC à d'autres composants électroniques sur une carte électronique, typiquement via un bus de communication.

Le composant électronique iUICC comporte en outre un cœur processeur, typiquement sous la forme d'un cœur microcontrôleur µC2, en charge d'effectuer des traitements au sein du composant électronique iUICC : calculs, traitements et transferts de données, etc.

Le composant électronique iUICC comporte en outre une mémoire volatile, telle qu'une mémoire vive RAM2, ainsi qu'au moins une mémoire non volatile, telle qu'une mémoire morte ROM2.

Lorsque le composant électronique iUICC est alimenté en énergie, le cœur microcontrôleur µC2 est capable d'exécuter des instructions, notamment sous forme de code intermédiaire, à partir de la mémoire morte ROM2. La mémoire morte ROM2 contient typiquement des instructions causant l'implémentation d'un système d'exploitation, préférentiellement un environnement JCRE selon la technologie Java Card, en s'appuyant sur la mémoire non volatile RAM2 pour créer, au moins, une pile (« stack » en anglais) d'exécution et pour stocker temporairement des données, telles que des données applicatives. La mémoire ROM2 contient typiquement des instructions d'applications, appelées *applets,* et plus particulièrement, lorsque l'application est instanciée, les objets desdites applications sont stockés dans la mémoire vive RAM2.

La **Fig. 2** illustre schématiquement une organisation logicielle implémentée par la carte à puce eUICC ou par le composant électronique iUICC. Une interface matérielle-logicielle (« hard-soft interface » en anglais) 250 permet de contrôler la carte à puce eUICC ou le composant électronique iUICC, en tant qu'entité matérielle, grâce à des instructions logicielles en provenance de ladite organisation logicielle.

Ladite organisation logicielle comporte une partie de système d'exploitation HOST_OS adaptée à l'entité matérielle, afin de permettre à une autre partie du système d'exploitation constituée de l'environnement JCRE de faire fonctionner la carte à puce eUICC. La partie de système d'exploitation HOST_OS permet de rendre l'environnement JCRE indépendant de la structure effective de l'entité matérielle.

L'environnement JCRE contient notamment la machine virtuelle JCVM, ainsi qu'un pare-feu logiciel FW (« software Firewall » en anglais). Les services de l'environnement JCRE sont utilisés par des applications APP, appelées *applets,* chacune créée au sein d'un contexte donné. Chaque contexte inclut une ou plusieurs applets. En terminologie Java Card, les contextes sont dénommés *packages.* En d'autres termes, les applets sont organisées en espaces de noms (« namespaces » en anglais) qui définissent ainsi un contexte d'exécution desdites applets.

D'après la technologie Java Card, le pare-feu logiciel FW applique certaines règles de vérification d'accès lorsqu'une première applet tente de faire un accès (appel, lecture ou écriture) à une seconde applet appartenant à un contexte (ou *package*) différent. Le pare-feu logiciel FW vérifie alors notamment auprès de la seconde applet que ladite seconde applet fournit une interface partagée et autorise ainsi un accès en provenance de la première applet. D'autres règles de vérification d'accès entre contextes peuvent être définies.

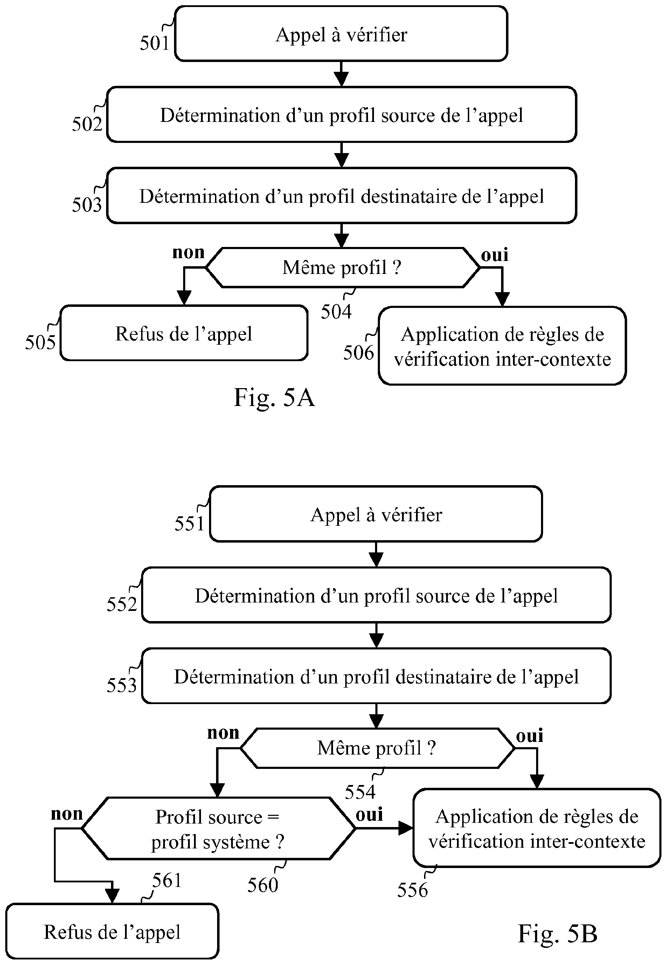

Dans le cadre de la présente invention, le pare-feu logiciel FW dispose de fonctionnalités complémentaires, de manière à permettre une gestion multi-profil et empêcher que des accès indésirables ne soient exécutés depuis une applet d'un premier profil d'utilisation vers une applet d'un second profil d'utilisation. Le comportement du pare-feu logiciel FW est détaillé ci-après en relation avec la Fig. 5A dans un premier mode de réalisation. Il peut toutefois exister un profil d'utilisation particulier (profil système), géré distinctement par le pare-feu logiciel FW, avec des droits d'accès propres aux autres profils d'utilisation (profils ordinaires). Cet aspect correspond à un second mode de réalisation détaillé ci-après en relation avec la Fig. 5B.

Dans le cadre de la présente invention, on entend par tentative d'accès par une première applet à une seconde applet l'une quelconque des actions suivantes : le fait qu'un objet de la première applet tente de lire ou d'écrire dans une donnée statique d'objets de la seconde applet ; le fait qu'un objet de la première applet tente de lire ou d'écrire dans une données non statique d'un objet de la seconde applet ; et le fait qu'un objet de la première applet tente de faire appel à une méthode d'un objet de la seconde applet. L'accès fait donc référence soit à une donnée statique, soit à une données non statique, soit à une méthode. A noter que le contrôle des tentatives d'accès à des données statiques est un point de divergence de l'approche de la présente invention par rapport à la technologie Java Card. Par exemple, à la section 6.1.6 des spécifications «Java Card Spécification 2.2.2 Final Release - Runtime Environment Spécification» de 2005, il est indiqué qu'il faut utiliser des objets à interface partagée pour partager une donnée à travers plusieurs contextes. Or, il est remplacer des données statiques par des objets à interface partagée est beaucoup plus coûteux en termes de complexité de programmation et, à l'usage, en termes de performance d'exécution. La présente invention permet de protéger des données statiques sans avoir à les transformer en objets à interface partagée au moment de la programmation.

Dans le contexte des cartes électroniques de type eUICC ou des composants électroniques de type iUICC, la protection des données statiques de type « référence » posent un problème particulier. La présente invention assure qu'un opérateur mal intentionné ne puisse pas modifier une référence qui serait une donnée statique d'un profil d'utilisation concurrent installé sur la même carte électronique de type eUICC ou sur le même composant électronique de type iUICC, et permet donc d'éviter qu'une attaque par déni de service DoS (« Deny of Service » en anglais) ne vienne perturber le bon fonctionnement du profil d'utilisation attaqué.

Le pare-feu logiciel FW permet ainsi de gérer des situations multi-profil, c'est-à-dire lorsque plusieurs profils d'utilisation coexistent au sein d'une même carte électronique de type eUICC ou d'un même composant électronique de type iUICC. Une telle situation multi-profil se retrouve par exemple lorsqu'une carte SIM permet d'accéder à des services de téléphonie offerts par des opérateurs distincts. Un profil d'utilisation est alors associé à chaque opérateur sur la carte SIM, et un profil d'utilisation peut être sélectivement activé parmi les différents profils d'utilisation de manière à pouvoir accéder aux services de téléphonie de l'opérateur auquel ledit profil d'utilisation est associé. Le pare-feu logiciel FW permet d'assurer que les applets du profil actif ne viennent pas accéder ou modifier les données des autres profils d'utilisation, et tout particulièrement en ce qui concerne les données statiques.

Il convient de noter que, sur la carte à puce eUICC ou dans le composant électronique iUICC, un seul contexte et un seul profil (celui dans lequel s'inscrit le contexte en question) ne sont actifs à la fois. Les autres contextes et les autres profils sont créés, mais inactifs. Des changements sélectifs de profils interviennent au cours de l'utilisation de la carte à puce eUICC ou du composant électronique iUICC, par exemple lorsqu'un utilisateur de ladite carte à puce eUICC ou du composant iUICC bascule d'un service de téléphonie souscrit auprès d'un opérateur vers un autre service de téléphonie souscrit auprès d'un autre opérateur, ou lorsque l'utilisateur de ladite carte à puce eUICC ou du composant électronique iUICC bascule d'un service fourni par un premier vendeur vers un service fourni par un autre vendeur. A noter aussi que des basculements de profil peuvent être réalisés manuellement ou automatiquement. Le profil actif jusqu'alors devient inactif, et un profil jusqu'alors inactif devient actif.

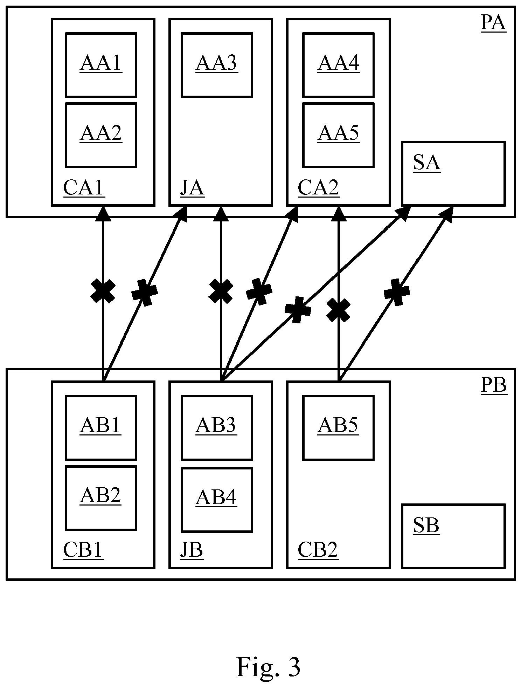

La **Fig.3** illustre schématiquement une gestion d'accès entre des applets appartenant à des contextes distincts, selon le premier mode de réalisation.

De manière illustrative, sur la Fig. 3, deux profils d'utilisation PA et PB sont présentés. Par exemple, considérons que les profils d'utilisation PA et PB sont utilisés dans le contexte de la carte à puce eUICC, et que la carte à puce eUICC est une carte SIM. Les profils PA et PB correspondent alors à des souscriptions de services de téléphonie auprès d'opérateurs distincts ou à des souscriptions de services de téléphonie pour des noms d'utilisateur distincts.

Le profil PA contient un premier contexte CA1 et un second contexte CA2. Le premier contexte CA1 contient une applet AA1 et une applet AA2. Le second contexte CA2 contient une applet AA4 et une applet AA5. Le profil PA contient en outre un troisième contexte JA destiné aux applets instanciées par l'environnement JCRE lorsque le profil PA est actif. Sur la Fig. 3, le troisième contexte JA contient une applet AA3. Le profil PA contient en outre des données statiques SA destinées aux différents contextes du profil PA.

Le profil PB contient un quatrième contexte CB1 et un cinquième contexte CB2. Le quatrième contexte CB1 contient une applet AB1 et une applet AB2. Le cinquième contexte CB2 contient une applet AB5. Le profil PB contient en outre un sixième contexte JB destiné aux applets instanciées par l'environnement JCRE lorsque le profil PB est actif. Sur la Fig. 3, le sixième contexte JB contient une applet AB3 et une applet AB4. Le profil PB contient en outre des données statiques SB destinées aux différents contextes du profil PB.

Lorsqu'un accès est effectué entre applets au sein d'un même profil d'utilisation (intra-profil), le pare-feu logiciel FW applique les règles de vérification d'accès entre contextes, c'est-à-dire notamment les règles de vérification d'accès usuelles déjà évoquées de la technologie Java Card (telles qu'on les retrouve dans les spécifications *« Java Card Classic Plateform », version 3.0.4* par exemple). Le pare-feu logiciel FW vérifie alors auprès de l'applet ciblée que ladite applet ciblée fournit une interface partagée et que ladite applet ciblée autorise ainsi un accès en provenance d'une autre applet.

Lorsqu'un accès est effectué depuis une première applet appartenant à un premier profil d'utilisation (*e.g*. le profil PB) vers une seconde applet appartenant à un second profil d'utilisation (*e.g*. le profil PA), le pare-feu logiciel FW refuse l'accès, même si la seconde applet fournit une interface partagée et autorise ainsi un accès en provenance d'une autre applet. Cela permet d'assurer l'herméticité entre les profils d'utilisation, même si l'accès concerne une donnée statique.

La Fig. 3 illustre ainsi que le pare-feu logiciel FW refuse tout accès intervenant depuis le profil PA vers le profil PB (et il en serait de même pour tout accès intervenant depuis le profil PB vers le profil PA). Notamment, la Fig. 3 montre que les accès suivants sont refusés par le pare-feu logiciel FW, indépendamment de toute interface partagée de l'applet à laquelle l'accès est destiné :
- accès depuis une applet du contexte CB1 vers une applet du contexte CA1 (il en serait de même à destination du contexte CA2) ;
- accès depuis une applet du contexte CB1 vers une applet du contexte JA (il en serait de même depuis le contexte CB2) ;
- accès depuis une applet du contexte JB vers une applet du contexte JA ;
- accès depuis une applet du contexte JB vers les données statiques SA ;
- accès depuis une applet du contexte JB vers une applet du contexte CA2 (il en serait de même à destination du contexte CA1) ;
- accès depuis une applet du contexte CB2 vers une applet du contexte CA2 (il en serait de même à destination du contexte CA1) ; et
- accès depuis une applet du contexte CB2 vers les données statiques SA (il en serait de même depuis le contexte CB1).

L'accès aux données statiques des profils PA et PB sont ainsi protégés grâce au pare-feu logiciel FW. Il n'y a donc pas besoin de changement de contexte pour que cette protection soit assurée. Comme listé ci-dessus, cette protection s'étend aussi aux accès impliquant des changements de contexte.

Une possibilité d'implémentation est de stocker dans l'interpréteur une table d'identification de profil d'utilisation, qui associe un profil d'utilisation à chaque identifiant d'instance. Pour un objet donné, l'interpréteur découvre l'identifiant d'instance concerné, et retrouve ainsi le profil d'utilisation concerné.

Cependant, dans un mode de réalisation préférentiel, les objets programmés ont des entêtes respectifs contenant une information d'appartenance à tel ou tel profil d'utilisation. Il est précisé ici que les données statiques sont concernées. Cela suppose donc une modification au niveau modèle mémoire par rapport à la technologie Java Card, car quand un profil d'utilisation est activé, une information identifiant ledit profil d'utilisation, dit profil actif, doit être mémorisée par le système d'exploitation. Le système d'exploitation stocke et maintient cette information au fil de l'utilisation de la carte à puce eUICC ou du composant électronique iUICC. De plus, comme l'interpréteur comporte un allocateur en charge des allocations mémoire, l'allocateur est également modifié par rapport à la technologie Java Card, pour renseigner le profil actif dans l'entête de chaque objet nouvellement créé. En stockant l'information de profil d'utilisation directement dans les objets appartenant audit profil d'utilisation, l'accès à l'information de profil d'utilisation est particulièrement rapide lors de l'interprétation du code intermédiaire qui tente d'accéder auxdits objets. En effet, le fait que l'information de profil d'utilisation soit colocalisée avec la donnée même à vérifier rend son accès plus rapide. Le mode de réalisation préférentiel permet d'éviter les deux indirections liées à la vérification de la table d'identification de profil d'utilisation lors de l'accès à un objet. Le mode de réalisation préférentiel est donc plus rapide en exécution, et évite de devoir assurer qu'un même identifiant d'instance ne soit utilisé pour différents profils d'utilisation.

Ainsi, dans un mode de réalisation particulier, le code intermédiaire dont l'interprétation est modifiée par rapport à la technologie Java Card est :
- pour les données statiques : getstatic, putstatic ; et
- pour les données non statiques et méthodes : getfield, putfield, athrow, <T>aload, <T>astore, arraylength, checkcast, instanceof, invokevirtual, invokeinterface, invokespecial, invokestatic où ci-dessus <T> réfère aux différents types de code intermédiaire de tableau (« array bytecode » en anglais).

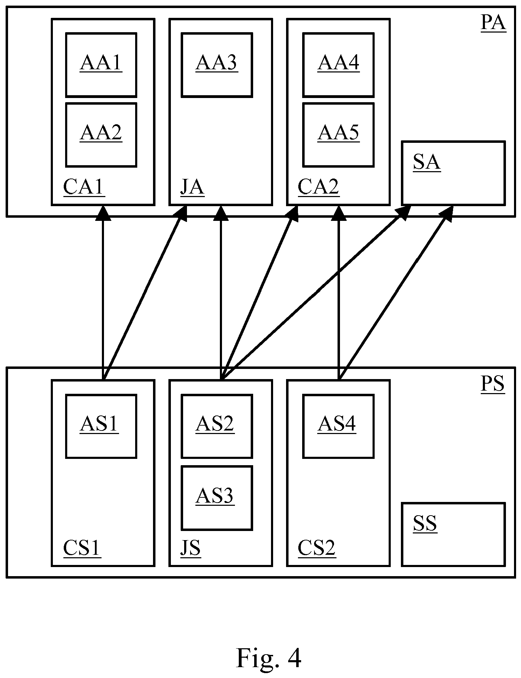

La **Fig. 4** illustre schématiquement une gestion d'accès entre des applets appartenant à des contextes distincts, selon le second mode de réalisation.

Dans le cadre du second mode de réalisation, un profil d'utilisation particulier est défini. Il est appelé *profil système* PS. Le profil système a des droits d'accès propres aux autres profils d'utilisation, appelés alors *profils ordinaires.* De manière illustrative, on retrouve ainsi sur la Fig. 4 le profil PA déjà présent sur la Fig. 3 (le profil PB aurait pu y être indifféremment représenté à la place du profil PA).

Dans un mode de réalisation particulier, le profil système est un profil d'utilisation associé aux applets instanciées par le fabricant de la carte à puce eUICC ou du composant électronique iUICC. Le profil système est en charge du téléchargement, de l'installation et de la mise en place des profils ordinaires. Par exemple, en considérant le cas où la carte à puce eUICC est une carte SIM, le profil système est associé au fabricant de la carte SIM, et les profils ordinaires sont associés à des opérateurs de téléphonie distincts auprès desquels l'utilisateur de la carte à puce eUICC a effectué des souscriptions de service. Le profil système permet ainsi notamment de centraliser toutes les données communes à l'ensemble des profils ordinaires, comme les données d'administration de la carte à puce eUICC elle-même, *e.g.* ECASD (« *eUICC* Controlling Authority Secure Domain » en anglais) et ISD-R (« Issuer Security Domain - Root » en anglais). Chaque profil ordinaire peut aussi inclure des données d'administration qui lui sont propres, *e.g*. CASD (« Controlling Authority Secure Domain » en anglais), il en serait de même dans le cadre d'une mise en œuvre du composant électronique iUICC.

Le profil PS contient un septième contexte CS1 et un huitième contexte CS2. Le septième contexte CS1 contient une applet AS1. Le huitième contexte CS2 contient une applet AS4. Le profil PS contient en outre un neuvième contexte JS destiné aux applets instanciées par l'environnement JCRE lorsque le profil PS est actif. Sur la Fig. 4, le neuvième contexte JS contient une applet AS2 et une applet AS3. Le profil PS peut contenir en outre des données statiques SS communes aux différents contextes du profil PS.

Lorsqu'un accès est effectué entre applets au sein d'un même profil d'utilisation (intra-profil), le pare-feu logiciel FW applique les règles de vérification d'accès entre contextes, c'est-à-dire notamment les règles de vérification d'accès usuelles déjà évoquées de la technologie Java Card (telles qu'on les retrouve dans les spécifications *« Java Card Classic Plateform », version 3.0.4* par exemple). Le pare-feu logiciel FW vérifie alors auprès de l'applet ciblée que ladite applet ciblée fournit une interface partagée et que ladite applet ciblée autorise ainsi un accès en provenance d'une autre applet.

De plus, lorsqu'un accès est effectué depuis une première applet appartenant au profil PS vers une seconde applet appartenant au profil PA, le pare-feu logiciel FW accepte l'accès, et applique aussi les règles de vérification d'accès entre contextes. Le pare-feu logiciel FW vérifie ainsi notamment si la seconde applet fournit une interface partagée et autorise ainsi un accès en provenance d'une autre applet. Le profil PS a ainsi accès aux profils ordinaires PA et PB. En d'autres termes, cela signifie que le pare-feu logiciel FW applique les règles de vérification d'accès entre contextes, comme si l'accès était intra-profil.

La Fig. 4 illustre ainsi que le pare-feu logiciel FW accepte tout accès intervenant depuis le profil PS vers le profil PA (et il en serait de même pour tout accès intervenant depuis le profil PS vers le profil PB). Notamment, la Fig. 4 montre que les accès suivants sont acceptés par le pare-feu logiciel FW :
- accès depuis une applet du contexte CS1 vers une applet du contexte CA1 (il en serait de même à destination du contexte CA2) ;
- accès depuis une applet du contexte CS1 vers une applet du contexte JA (il en serait de même depuis le contexte CS2) ;
- accès depuis une applet du contexte JS vers une applet du contexte JA ;
- accès depuis une applet du contexte JS vers une applet du contexte CA2 (il en serait de même à destination du contexte CA1) ;
- accès depuis une applet du contexte CS2 vers une applet du contexte CA2 (il en serait de même à destination du contexte CA1) ; et
- accès depuis une applet du contexte CS2 vers les données statiques SA (il en serait de même depuis le contexte CS1).

A l'inverse, les accès émanant du profil PA (il en serait de même en provenance du profil PB) à destination du profil PS sont refusés par le pare-feu logiciel FW, indépendamment de toute interface partagée de l'applet à laquelle l'accès est destiné.

L'accès aux données statiques du profil PS sont ainsi protégés grâce au pare-feu logiciel FW. Il n'y a donc pas besoin de changement de contexte pour que cette protection soit assurée. Comme listé ci-dessus, cette protection s'étend aussi aux accès impliquant des changements de contexte.

On remarque à la lecture de la description des Figs. 3 et 4 que chaque applet est associée à un unique contexte et que chaque contexte est associé à une ou plusieurs applets. On remarque aussi que chaque contexte est associé à un unique profil d'utilisation et que chaque profil d'utilisation est associé à un ou plusieurs contextes.

La **Fig. 5A** illustre schématiquement un algorithme, implémenté par le pare-feu logiciel FW, de traitement d'un accès entre applets, selon le premier mode de réalisation.

Dans une étape 501, le pare-feu logiciel FW reçoit un accès à vérifier. Le pare-feu logiciel FW en est informé par l'interpréteur, à savoir la machine virtuelle JCVM. L'accès concerne préférentiellement une donnée statique. Le même principe est toutefois préférentiellement appliqué aussi à une donnée non statique et/ou à une méthode.

Dans une étape 502, le pare-feu logiciel FW détermine un profil source de l'accès. En d'autres termes, le pare-feu logiciel FW vérifie à quel profil d'utilisation appartient l'applet à l'origine de l'accès en question. Une information représentative du profil actif est fournie au pare-feu logiciel FW en parallèle de l'accès à vérifier.

Dans une étape 503, le pare-feu logiciel FW détermine un profil destinataire de l'accès. En d'autres termes, le pare-feu logiciel FW vérifie à quel profil d'utilisation appartient l'applet ciblée par l'accès en question. L'accès est destiné à un objet, relatif à une applet donnée, instancié dans ledit profil destinataire. Cet objet contient préférentiellement une information dudit profil destinataire, dans lequel ledit objet est instancié. Chaque objet est ainsi auto-descriptif, comme détaillé précédemment.

Il est rappelé ici aussi l'autre approche consiste à inclure, dans le pare-feu logiciel FW, une table listant les profils d'utilisation existant sur la carte à puce eUICC ou sur le composant électronique iUICC, ainsi que les contextes existant au sein de chaque profil d'utilisation, ainsi que les applets existant au sein de chaque contexte. Cette table est mise à jour à chaque instanciation de profil d'utilisation, de contexte et d'applet. Le pare-feu logiciel FW retrouve ainsi dans ladite table à quel profil d'utilisation appartient l'applet ciblée par l'accès en question.

Dans une étape 504, le pare-feu logiciel FW vérifie si le profil source de l'accès, déterminé à l'étape 502, est identique au profil destinataire de l'accès, déterminé à l'étape 503. Typiquement, le profil d'utilisation actif, c'est-à-dire le profil source, est maintenu dans une variable persistante, à laquelle le pare-feu logiciel FW a accès. Lorsque le profil source de l'accès est identique au profil destinataire de l'accès, une étape 506 est effectuée ; sinon, une étape 505 est effectuée.

Dans l'étape 505, le pare-feu logiciel FW refuse l'accès, indépendamment du fait que l'applet ciblée par l'accès fournisse ou pas une interface partagée. Aucun accès à l'applet ciblée par l'accès n'est donc donné. Il est alors mis fin à l'algorithme de la Fig. 5A.

Dans l'étape 506, le pare-feu logiciel FW applique les règles susmentionnées de vérification d'accès entre contextes. En d'autres termes, le pare-feu logiciel FW vérifie notamment si l'applet ciblée par l'accès fournit ou pas une interface partagée. Ainsi, si l'applet ciblée par l'accès fournit une interface partagée, l'accès à l'applet ciblée par l'accès est donné ; sinon, l'accès est refusé et aucun accès à l'applet ciblée par l'accès n'est donné. Il est alors mis fin à l'algorithme de la Fig. 5A.

La **Fig. 5B** illustre schématiquement un algorithme, implémenté par le pare-feu logiciel, de traitement d'un accès entre applets, selon le second mode de réalisation.

Dans une étape 551, le pare-feu logiciel FW reçoit un accès à vérifier. L'étape 551 est identique à l'étape 501. Ainsi, l'accès concerne préférentiellement une donnée statique. Le même principe est toutefois préférentiellement appliqué aussi à une donnée non statique et/ou à une méthode.

Dans une étape 552, le pare-feu logiciel FW détermine un profil source de l'accès. L'étape 552 est identique à l'étape 502.

Dans une étape 553, le pare-feu logiciel FW détermine un profil destinataire de l'accès. L'étape 553 est identique à l'étape 503.

Dans une étape 554, le pare-feu logiciel FW vérifie si le profil source de l'accès, déterminé à l'étape 552, est identique au profil destinataire de l'accès, déterminé à l'étape 553. L'étape 554 est identique à l'étape 504. Lorsque le profil source de l'accès est identique au profil destinataire de l'accès, une étape 556 est effectuée ; sinon, une étape 560 est effectuée.

Dans l'étape 556, le pare-feu logiciel FW applique les règles susmentionnées de vérification d'accès entre contextes. En d'autres termes, le pare-feu logiciel FW vérifie si l'applet ciblée par l'accès fournit ou pas une interface partagée. Ainsi, si l'applet ciblée par l'accès fournit une interface partagée, l'accès à l'applet ciblée par l'accès est donné ; sinon, l'accès est refusé et aucun accès à l'applet ciblée par l'accès n'est donné. Il est alors mis fin à l'algorithme de la Fig. 5B.

Dans l'étape 560, le pare-feu logiciel FW vérifie si le profil source de l'accès est le profil système PS. Si tel est le cas, l'étape 556 est effectuée ; sinon, une étape 561 est effectuée. En d'autres termes, lorsque l'étape 556 est ici effectuée, le pare-feu logiciel FW vérifie si l'applet ciblée par l'accès fournit ou pas une interface partagée. Ainsi, si l'applet ciblée par l'accès fournit une interface partagée, l'accès à l'applet ciblée par l'accès est donné ; sinon, l'accès est refusé et aucun accès à l'applet ciblée par l'accès n'est donné. Il est alors mis fin à l'algorithme de la Fig. 5B. Ainsi, contrairement aux profils ordinaires, le profil système PS peut effectuer des accès aux applets d'autres profils si lesdites applets fournissent respectivement des interfaces partagées.

Dans l'étape 561, le pare-feu logiciel FW refuse l'accès, indépendamment du fait que l'applet ciblée par l'accès fournisse ou pas une interface partagée. Aucun accès à l'applet ciblée par l'accès n'est donc donné. Il est alors mis fin à l'algorithme de la Fig. 5B.

## Revendications

1. Procédé de vérification d'exécution d'applets (AA1, AB1) développées en langage orienté objet et compilées en code intermédiaire, le procédé étant implémenté par un pare-feu logiciel (FW) d'un système d'exploitation installé dans un composant électronique de type iUICC ou sur une carte électronique de type eUICC, le système d'exploitation comportant un interpréteur (JCVM) qui est un logiciel interprétant et exécutant le code intermédiaire des applets (AA1, AB1), chaque applet (AA1, AB1) étant associée à un unique contexte (CA1, CB1, JB), chaque contexte (CA1, CB1, JB) étant associé à une ou plusieurs applets,
chaque contexte (CA1, CB1, JB) étant associé à un unique profil d'utilisation (PA, PB) parmi plusieurs profils d'utilisation, chaque profil d'utilisation (PA, PB) étant associé à un ou plusieurs contextes (CA1, CB1, JB),
et, lorsque le pare-feu logiciel (FW) est informé par l'interpréteur (JCVM) d'un accès à une donnée statique depuis une première applet (AB1) vers une seconde applet (AB3, AA1), le pare-feu logiciel (FW) effectue les étapes suivantes :
- déterminer (502, 552) un profil source de l'accès à la donnée statique, qui est le profil associé au contexte auquel est associée la première applet (AB1) ;
- déterminer (503, 553) un profil destinataire de l'accès à la donnée statique, qui est le profil associé au contexte auquel est associée la seconde applet (AB3, AA1) ;
- vérifier (504, 554) si le profil source de l'accès est identique au profil destinataire de l'accès à la donnée statique ;
- lorsque le profil source de l'accès à la donnée statique n'est pas identique au profil destinataire de l'accès à la donnée statique, refuser (505, 561) l'accès à la donnée statique ; et
- lorsque le profil source de l'accès à la donnée statique est identique au profil destinataire de l'accès à la donnée statique, appliquer (506, 556) des règles de vérification d'accès entre contextes.

2. Procédé selon la revendication 1, **caractérisé en ce qu'**un desdits profils d'utilisation est un profil particulier, appelé profil système (PS), géré distinctement des autres profils d'utilisation (PA, PB) par le pare-feu logiciel (FW), de telle sorte que, lorsque le profil source de l'accès à la donnée statique est le profil système (PS), le pare-feu logiciel (FW) applique les règles de vérification d'accès entre contextes, et lorsque le profil destinataire de l'accès à la donnée statique est le profil système (PS), le pare-feu logiciel (FW) refuse l'accès à la donnée statique.

3. Procédé selon l'une quelconque des revendications 1 et 2, **caractérisé en ce que**, lorsque le pare-feu logiciel (FW) est informé par l'interpréteur (JCVM) d'un accès à une donnée non statique ou à une méthode depuis une première applet (AB1) vers une seconde applet (AB3, AA1), le pare-feu logiciel (FW) effectue les étapes suivantes :
- déterminer (502, 552) le profil source de l'accès à la donnée non statique ou à la méthode ;
- déterminer (503, 553) le profil destinataire de l'accès à la donnée non statique ou à la méthode ;
- vérifier (504, 554) si le profil source de l'accès à la donnée non statique ou à la méthode est identique au profil destinataire de l'accès à la donnée non statique ou à la méthode ;
- lorsque le profil source de l'accès à la donnée non statique ou à la méthode n'est pas identique au profil destinataire de l'accès à la donnée non statique ou à la méthode, refuser (505, 561) l'accès à la donnée non statique ou à la méthode ; et
- lorsque le profil source de l'accès à la donnée non statique ou à la méthode est identique au profil destinataire de l'accès à la donnée non statique ou à la méthode, appliquer (506, 556) des règles de vérification d'accès entre contextes.

4. Procédé selon la revendication 2, **caractérisé en ce que**, lorsque le profil source de l'accès à la donnée non statique ou à la méthode est le profil système (PS), le pare-feu logiciel (FW) applique les règles de vérification d'accès entre contextes, et lorsque le profil destinataire de l'accès à la donnée non statique ou à la méthode est le profil système (PS), le pare-feu logiciel (FW) refuse l'accès à la donnée non statique ou à la méthode.

5. Procédé selon l'une quelconque des revendications 1 à 4, **caractérisé en ce que**, un seul profil d'utilisation étant actif à la fois, dit profil actif, et l'interpréteur comportant un allocateur en charge des allocations mémoire, l'allocateur renseigne le profil actif dans l'entête de tout objet nouvellement créé.

6. Procédé selon l'une quelconque des revendications 1 à 5, **caractérisé en ce que** la carte électronique de type eUICC est une carte SIM et **en ce que** les profils d'utilisation sont respectivement associés à des services de téléphonie d'opérateurs distincts.

7. Pare-feu logiciel (FW) configuré pour effectuer une vérification d'exécution d'applets (AA1, AB1) développées en langage orienté objet et compilées en code intermédiaire, le pare-feu logiciel (FW) étant destiné à appartenir à un système d'exploitation destiné à être installé dans un composant électronique de type iUICC ou sur une carte électronique de type eUICC, le système d'exploitation comportant un interpréteur (JCVM) qui est un logiciel interprétant et exécutant le code intermédiaire des applets (AA1, AB1), chaque applet (AA1, AB1) étant associée à un unique contexte (CA1, CB1, JB), chaque contexte (CA1, CB1, JB) étant associé à une ou plusieurs applets,
chaque contexte (CA1, CB1, JB) étant associé à un unique profil d'utilisation (PA, PB) parmi plusieurs profils d'utilisation, chaque profil d'utilisation (PA, PB) étant associé à un ou plusieurs contextes (CA1, CB1, JB),
et, lorsque le pare-feu logiciel (FW) est informé par l'interpréteur (JCVM) d'un accès à une donnée statique depuis une première applet (AB1) vers une seconde applet (AB3, AA1), le pare-feu logiciel (FW) effectue les étapes suivantes :
- déterminer (502, 552) un profil source de l'accès à la donnée statique, qui est le profil associé au contexte auquel est associée la première applet (AB1) ;
- déterminer (503, 553) un profil destinataire de l'accès à la donnée statique, qui est le profil associé au contexte auquel est associée la seconde applet (AB3, AA1) ;
- vérifier (504, 554) si le profil source de l'accès à la donnée statique est identique au profil destinataire de l'accès à la donnée statique ;
- lorsque le profil source de l'accès à la donnée statique n'est pas identique au profil destinataire de l'accès à la données statique, refuser (505, 561) l'accès à la donnée statique ; et
- lorsque le profil source de l'accès à la donnée statique est identique au profil destinataire de l'accès à la donnée statique, appliquer (506, 556) des règles de vérification d'accès entre contextes.

8. Carte électronique de type eUICC comportant un système d'exploitation intégrant un pare-feu logiciel (FW), selon la revendication 7, configuré pour effectuer une vérification d'exécution d'applets (AA1, AB1) développées en langage orienté objet et compilées en code intermédiaire.

9. Carte électronique de type eUICC selon la revendication 8, **caractérisée en ce que** la carte électronique de type eUICC est une carte SIM et **en ce que** les profils d'utilisation sont respectivement associés à des services de téléphonie d'opérateurs distincts.

10. Composant électronique de type iUICC comportant un système d'exploitation intégrant un pare-feu logiciel (FW), selon la revendication 7, configuré pour effectuer une vérification d'exécution d'applets (AA1, AB1) développées en langage orienté objet et compilées en code intermédiaire.

## Patentansprüche

1. Verfahren zur Überprüfung der Ausführung von Applets (AA1, AB1), die in objektorientierter Sprache entwickelt und in Zwischencode kompiliert sind, wobei das Verfahren von einer Software-Firewall (FW) eines Betriebssystems implementiert wird, das in einem elektronischen Bauelement vom Typ iUICC oder auf einer elektronischen Karte vom Typ eUICC installiert ist, wobei das Betriebssystem einen Interpreter (JCVM) umfasst, der eine Software ist, die den Zwischencode der Applets (AA1, AB1) interpretiert und ausführt, wobei jedes Applet (AA1, AB1) einem einzigen Kontext (CA1, CB1, JB) zugeordnet ist, wobei jeder Kontext (CA1, CB1, JB) einem oder mehreren Applets zugeordnet ist,
wobei jeder Kontext (CA1, CB1, JB) einem einzigen Nutzungsprofil (PA, PB) unter mehreren Nutzungsprofilen zugeordnet ist, wobei jedes Nutzungsprofil (PA, PB) einem oder mehreren Kontexten (CA1, CB1, JB) zugeordnet ist, und, wenn die Software-Firewall (FW) vom Interpreter (JCVM) über einen Zugriff auf ein statisches Datenelement von einem ersten Applet (AB1) zu einem zweiten Applet (AB3, AA1) informiert wird, die Software-Firewall (FW) die folgenden Schritte durchführt:
- Bestimmen (502, 552) eines Quellprofils des Zugriffs auf das statische Datenelement, welches das Profil ist, das dem Kontext zugeordnet ist, dem das erste Applet (AB 1) zugeordnet ist;
- Bestimmen (503, 553) eines Zielprofils des Zugriffs auf das statische Datenelement, welches das Profil ist, das dem Kontext zugeordnet ist, dem das zweite Applet (AB3, AA1) zugeordnet ist;
- Überprüfen (504, 554), ob das Quellprofil identisch mit dem Zielprofil des Zugriffs auf das statische Datenelement ist;
- wenn das Quellprofil des Zugriffs auf das statische Datenelement nicht identisch mit dem Zielprofil des Zugriffs auf das statische Datenelement ist, Verweigern (505, 561) des Zugriffs auf das statische Datenelement; und
- wenn das Quellprofil des Zugriffs auf das statische Datenelement identisch mit dem Zielprofil des Zugriffs auf das statische Datenelement ist, Anwenden (506, 556) der Regeln zur Überprüfung von Zugriffen zwischen Kontexten.

2. Verfahren nach Anspruch 1, **dadurch gekennzeichnet, dass** eines der Nutzungsprofile ein besonderes Profil ist, das Systemprofil (PS) genannt wird, das von der Software-Firewall (FW) verschieden von den anderen Nutzungsprofilen (PA, PB) verwaltet wird, so dass, wenn das Quellprofil des Zugriffs auf das statische Datenelement das Systemprofil (PS) ist, die Software-Firewall (FW) die Regeln zur Überprüfung von Zugriffen zwischen Kontexten anwendet, und wenn das Zielprofil des Zugriffs auf das statische Datenelement das Systemprofil (PS) ist, die Software-Firewall (FW) den Zugriff auf das statische Datenelement verweigert.

3. Verfahren nach einem der Ansprüche 1 und 2, **dadurch gekennzeichnet, dass**, wenn die Software-Firewall (FW) vom Interpreter (JCVM) über einen Zugriff auf ein nicht-statisches Datenelement oder auf eine Methode von einem ersten Applet (AB1) zu einem zweiten Applet (AB3, AA1) informiert wird, die Software-Firewall (FW) die folgenden Schritte durchführt:
- Bestimmen (502, 552) des Quellprofils des Zugriffs auf das nicht-statische Datenelement oder auf die Methode;
- Bestimmen (503, 553) des Zielprofils des Zugriffs auf das nicht-statische Datenelement oder auf die Methode;
- Überprüfen (504, 554), ob das Quellprofil des Zugriffs auf das nicht-statische Datenelement identisch mit dem Zielprofils des Zugriffs auf das nicht-statische Datenelement oder auf die Methode ist;
- wenn das Quellprofil des Zugriffs auf das nicht-statische Datenelement oder auf die Methode nicht identisch mit dem Zielprofil des Zugriffs auf das nicht-statische Datenelement oder auf die Methode ist, Verweigern (505, 561) des Zugriffs auf das nicht-statische Datenelement oder auf die Methode; und
- wenn das Quellprofil des Zugriffs auf das nicht-statische Datenelement oder auf die Methode identisch mit dem Zielprofil des Zugriffs auf das nicht-statische Datenelement oder auf die Methode ist, Anwenden (506, 556) der Regeln zur Überprüfung von Zugriffen zwischen Kontexten.

4. Verfahren nach Anspruch 2, **dadurch gekennzeichnet, dass**, wenn das Quellprofil des Zugriffs auf das nicht-statische Datenelement oder auf die Methode das Systemprofil (PS) ist, die Software-Firewall (FW) die Regeln zur Überprüfung von Zugriffen zwischen Kontexten anwendet, und, wenn das Zielprofil des Zugriffs auf das nicht-statische Datenelement oder auf die Methode das Systemprofil (PS) ist, die Firewall (FW) den Zugriff auf das nicht-statische Datenelement oder auf die Methode verweigert.

5. Verfahren nach einem der Ansprüche 1 bis 4, **dadurch gekennzeichnet, dass**, wenn ein einziges Nutzungsprofil, aktives Profil genannt, zurzeit aktiv ist und der Interpreter einen Allocator umfasst, der für die Speicherallokationen zuständig ist, der Allocator das aktive Profil im Header jedes neu erstellten Objekts angibt.

6. Verfahren nach einem der Ansprüche 1 bis 5, **dadurch gekennzeichnet, dass** die elektronische Karte vom Typ eUICC eine SIM-Karte ist und dass die Nutzungsprofile jeweils Telefoniediensten von verschiedenen Netzbetreibern zugeordnet sind.

7. Software-Firewall (FW), die dazu konfiguriert ist, eine Überprüfung der Ausführung von Applets (AA1, AB1) durchzuführen, die in objektorientierter Sprache entwickelt und in Zwischencode kompiliert sind, wobei die Software-Firewall (FW) dazu bestimmt ist, zu einem Betriebssystem zu gehören, das dazu bestimmt ist, in einem elektronischen Bauelement vom Typ iUICC oder auf einer elektronischen Karte vom Typ eUICC installiert zu werden, wobei das Betriebssystem einen Interpreter (JCVM) umfasst, der eine Software ist, die den Zwischencode der Applets (AA1, AB1) interpretiert und ausführt, wobei jedes Applet (AA1, AB1) einem einzigen Kontext (CA1, CB1, JB) zugeordnet ist, wobei jeder Kontext (CA1, CB1, JB) einem oder mehreren Applets zugeordnet ist,
wobei jeder Kontext (CA1, CB1, JB) einem einzigen Nutzungsprofil (PA, PB) unter mehreren Nutzungsprofilen zugeordnet ist, wobei jedes Nutzungsprofil (PA, PB) einem oder mehreren Kontexten (CA1, CB1, JB) zugeordnet ist, und, wenn die Software-Firewall (FW) vom Interpreter (JCVM) über einen Zugriff auf ein statisches Datenelement von einem ersten Applet (AB1) zu einem zweiten Applet (AB3, AA1) informiert wird, die Software-Firewall (FW) die folgenden Schritte durchführt:
- Bestimmen (502, 552) eines Quellprofils des Zugriffs auf das statische Datenelement, welches das Profil ist, das dem Kontext zugeordnet ist, dem das erste Applet (AB 1) zugeordnet ist;
- Bestimmen (503, 553) eines Zielprofils des Zugriffs auf das statische Datenelement, welches das Profil ist, das dem Kontext zugeordnet ist, dem das zweite Applet (AB3, AA1) zugeordnet ist;
- Überprüfen (504, 554), ob das Quellprofil des Zugriffs auf das statische Datenelement identisch mit dem Zielprofil des Zugriffs auf das statische Datenelement ist;
- wenn das Quellprofil des Zugriffs auf das statische Datenelement nicht identisch mit dem Zielprofil des Zugriffs auf das statische Datenelement ist, Verweigern (505, 561) des Zugriffs auf das statische Datenelement; und
- wenn das Quellprofil des Zugriffs auf das statische Datenelement identisch mit dem Zielprofil des Zugriffs auf das statische Datenelement ist, Anwenden (506, 556) der Regeln zur Überprüfung von Zugriffen zwischen Kontexten.

8. Elektronische Karte vom Typ eUICC, die ein Betriebssystem umfasst, das eine Software-Firewall (FW) nach Anspruch 7 umfasst, die dazu konfiguriert ist, eine Überprüfung der Ausführung von Applets (AA1, AB1) durchzuführen, die in objektorientierter Sprache entwickelt und in Zwischencode kompiliert sind.

9. Elektronische Karte vom Typ eUICC nach Anspruch 8, **dadurch gekennzeichnet, dass** die elektronische Karte vom Typ eUICC eine SIM-Karte ist und dass die Nutzungsprofile jeweils Telefoniediensten von verschiedenen Netzbetreibern zugeordnet sind.

10. Elektronisches Bauelement vom Typ iUICC, das ein Betriebssystem umfasst, das eine Software-Firewall (FW) nach Anspruch 7 umfasst, die dazu konfiguriert ist, eine Überprüfung der Ausführung von Applets (AA1, AB1) durchzuführen, die in objektorientierter Sprache entwickelt und in Zwischencode kompiliert sind.

## Claims

1. Method for checking execution of applets (AA1, AB1) developed in object-oriented language and compiled in bytecode, the method being implemented by a software firewall (FW) of an operating system installed in a chip of the iUICC type or on an electronic card of the eUICC type, the operating system comprising an interpreter (JCVM) that is software interpreting and executing the bytecode of the applets (AA1, AB1), each applet (AA1, AB1) being associated with a single context (CA1, CB1, JB), each context (CA1, CB1, JB) being associated with one or more applets,
each context (CA1, CB1, JB) being associated with a single use profile (PA, PB) among a plurality of use profiles, and each use profile (PA, PB) being associated with one or more contexts (CA1, CB1, JB),
and, when the software firewall (FW) is informed by the interpreter (JCVM) of access to a static data item from a first applet (AB1) to a second applet (AB3, AA1), the software firewall (FW) performs the following steps:
- determining (502, 552) a source profile of the access to the static data item, which is the profile associated with the context with which the first applet (AB1) is associated;
- determining (503, 553) a destination profile of the access to the static data item, which is the profile associated with the context with which the second applet (AB3, AA1) is associated;
- checking (504, 554) whether the source profile of the access is identical to the destination profile of the access to the static data item;
- when the source profile of the access to the static data item is not identical to the destination profile of the access to the static data item, refusing (505, 561) access to the static data item; and
- when the source profile of the access to the static data item is identical to the destination profile of the access to the static data item, applying (506, 556) intercontext access checking rules.

2. Method according to claim 1, **characterised in that** one of said use profiles is a particular profile, referred to as a system profile (PS), managed separately from the other use profiles (PA, PB) by the software firewall (FW), so that, when the source profile of the access to the static data item is the system profile (PS), the software firewall (FW) applies the intercontext access checking rules and, when the destination profile of the access to the static data item is the system profile (PS), the software firewall (FW) refuses access to the static data item.

3. Method according to any one of claims 1 and 2, **characterised in that**, when the software firewall (FW) is informed by the interpreter (JCVM) of an access to a non-static data item or to a method from a first applet (AB1) to a second applet (AB3, AA1), the software firewall (FW) performs the following steps:
- determining (502, 552) the source profile of the access to the non-static data item or to the method;
- determining (503, 553) the destination profile of the access to the non-static data item or to the method;
- checking (504, 554) whether the source profile of the access to the non-static data item or to the method is identical to the destination profile of the access to the non-static data item or to the method;
- when the source profile of the access to the non-static data item or to the method is not identical to the destination profile of the access to the non-static data item or to the method, refusing (505, 561) access to the non-static data item or to the method; and
- when the source profile of the access to the non-static data item or to the method is identical to the destination profile of the access to the non-static data item or to the method, applying (506, 556) intercontext access checking rules.

4. Method according to claim 2, **characterised in that**, when the source profile of the access to the non-static data item or to the method is the system profile (PS), the software firewall (FW) applies the intercontext access checking rules, and, when the destination profile of the access to the non-static data item or to the method is the system profile (PS), the software firewall (FW) refuses access to the non-static data item or to the method.

5. Method according to any one of claims 1 to 4, **characterised in that**, only one use profile being active at any one time, referred to as active profile, and the interpreter comprising an allocator responsible for memory allocations, the allocator gives information about the active profile in the header of any newly created object.

6. Method according to any one of claims 1 to 5, **characterised in that** the electronic card of the eUICC type is a SIM card and **in that** the use profiles are respectively associated with separate operator telephony services.

7. Software firewall (FW) configured to perform a checking of execution of applets (AA1, AB1) developed in object-oriented language and compiled in bytecode, the software firewall (FW) being intended to belong to an operating system intended to be installed in a chip of the iUICC type or on an electronic card of the eUICC type, the operating system comprising an interpreter (JCVM) that is software interpreting and executing the bytecode of the applets (AA1, AB1), each applet (AA1, AB1) being associated with a single context (CA1, CB 1, JB), each context (CA1, CB 1, JB) being associated with one or more applets,
each context (CA1, CB1, JB) being associated with a single use profile (PA, PB) among a plurality of use profiles, and each use profile (PA, PB) being associated with one or more contexts (CA1, CB1, JB),
and, when the software firewall (FW) is informed by the interpreter (JCVM) of access to a static data item from a first applet (AB1) to a second applet (AB3, AA1), the software firewall (FW) performs the following steps:
- determining (502, 552) a source profile of the access to the static data item, which is the profile associated with the context with which the first applet (AB1) is associated;
- determining (503, 553) a destination profile of the access to the static data item, which is the profile associated with the context with which the second applet (AB3, AA1) is associated;
- checking (504, 554) whether the source profile of the access to the static data item is identical to the destination profile of the access to the static data item;
- when the source profile of the access to the static data item is not identical to the destination profile of the access to the static data item, refusing (505, 561) access to the static data item; and
- when the source profile of the access to the static data item is identical to the destination profile of the access to the static data item, applying (505, 561) intercontext access checking rules.

8. Electronic card of the eUICC type comprising an operating system integrating a software firewall (FW) according to claim 7, configured to perform a check on execution of applets (AA1, AB1) developed in object-oriented language and compiled in bytecode.

9. Electronic card of the eUICC type according to claim 8, **characterised in that** the electronic card of the eUICC type is a SIM card and **in that** the use profiles are respectively associated with telephony services of separate operators.

10. Chip of the iUICC type comprising an operating system integrating a software firewall (FW) according to claim 7, configured to perform a check on execution of applets (AA1, AB1) developed in object-oriented language and compiled in bytecode.
